# EUROPEAN PATENT APPLICATION

(11) **EP 3 499 880 A1**
(43) Date of publication of application: **19.06.2019**
(21) Application number: 18194352.3
(22) Date of filing: 13.09.2018
(51) Int. Cl.: H04N 7/18, H04N 21/4402, H04N 19/115, H04N 19/162, H04N 19/172, H04N 21/2343, H04N 21/472, H04N 21/6587

(54) **SYSTEMS AND METHODS FOR TRANSMITTING A HIGH QUALITY VIDEO IMAGE FROM A LOW POWER SENSOR**

(30) Priority: 18.12.2017 US 201715845178
(71) Applicant: Honeywell International Inc., Morris Plains, NJ 07950 (US)
(72) Inventor: XIAO, Zhi Min, Morris Plains, NJ 07950 (US); LI, Yu Lin, Morris Plains, NJ 07950 (US); DING, Zhong Wei, Morris Plains, NJ 07950 (US)
(74) Representative: Houghton, Mark Phillip

(57) **Abstract**

Systems and methods for transmitting a high quality video image to a mobile device are provided. Some methods can include storing a plurality of images captured by a camera, compressing the plurality of images to generate a compressed video stream file, transmitting the compressed video stream file to a remote device over a network in response to receiving a play video command from the remote device over the network, and transmitting one of the plurality of images to the remote device over the network in response to receiving a pause video command from the remote device over the network.

## Description

### FIELD

The present invention relates generally to security and surveillance systems. More particularly, the present invention relates to systems and methods for transmitting a high quality video image from a low power sensor.

### BACKGROUND

In known security systems, one or more surveillance cameras capture video of a secure area. The surveillance cameras transmit the captured video as a video data stream to a mobile device, such as a user's cell phone. Generally, the captured video transmitted to the mobile device is compressed, thereby lowering video quality, due to network bandwidth restrictions. However, the low quality video transmitted to the mobile device may be insufficient for proper viewing of the video data stream

In view of the above, there is a continuing, ongoing need for improved systems and methods for transmitting a high quality video image to a mobile device.

### BRIEF DESCRIPTION OF THE DRAWINGS

FIG. 1 is a block diagram of a system in accordance with disclosed embodiments;
FIG. 2 is a block diagram of a wireless sensor in accordance with disclosed embodiments; and
FIG. 3 is a flow diagram of a method in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for transmitting one or more high quality images in response to a command received from a mobile device over a network. For example, the systems and methods disclosed herein can transmit low quality images in a video data stream when transmitting a motion picture over the network and transmit a high quality image in response to receiving a pause video command from the mobile device. In some embodiments, video quality may correspond with a video resolution or a video compression level. For example, if video is highly compressed, then high-frequency details and the video quality may decrease. In some embodiments, the low quality images in the video data stream can include a lower pixel resolution (720x480 pixels) than the high quality image (e.g. 1200x800 pixels)

Embodiments disclosed herein can include surveillance cameras, passive infrared (PIR) cameras, or any type of camera capable of capturing the video images. For example, a PIR camera can record the video images in response to a PIR sensor detecting motion. The PIR camera and the PIR sensor can use less energy than a surveillance camera that constantly captures the video images.

In some embodiments, systems and methods disclosed herein can include a PIR or low energy, wireless camera that can transmit video images to a control panel within a secure area. One or both of the wireless camera and the control panel can store high quality images captured by the camera in a first file or a first set of files. One or both of the wireless camera and the control panel can compress the high quality images captured by the camera and store the compressed images (e.g. the low quality images) as a second file or a second set of files. Furthermore, one or both of the control panel and the camera can communicate with the mobile device, such as a user's smartphone, over the Internet and transmit some or all of the high quality images or the low quality images of the video data stream over the Internet.

In some embodiments, one or both of the control panel and the wireless camera can transmit the low quality images of the video data stream (i.e. the second file or the second set of files) in response to a first command from the mobile device requesting the video images. In some embodiments, one or both of the control panel and the wireless camera can transmit the high quality image of a particular video frame (i.e. the first file or one of the first set of files) when one or both of the control panel and the wireless camera receives a second command from the mobile device, for example, to pause the video data stream. In some embodiments, one or both of the control panel and the wireless camera can also store a third video file or a third set of files that include images with an intermediate video quality level in response to a third command from the mobile device, for example, to play the video data stream in slow motion. In some embodiments, the images with the intermediate video quality level may be compressed, but less than the low quality images in the video data stream (e.g. the second file or second set of files). For example, in some embodiments, the intermediate video quality level can include a lower compression ratio than the low quality images. Examples of compression techniques include MPEG, Motion JPEG, H.261/263, etc.

It is to be understood that systems and methods disclosed herein can be executed and controlled by a surveillance system and that the surveillance system can include a plurality of cameras, a control panel device, a network, and a server device. It is to be further understood that some or all of the surveillance system, the plurality of cameras, the control panel device, the network, and the server device can include a user interface device, a memory device, and a transceiver device each of which can be in communication with control circuitry, one or more programmable processors, and executable control software as would be understood by one of ordinary skill in the art. The executable control software can be stored on a transitory or non-transitory computer readable medium, including but not limited to local computer memory, RAM, optical storage media, magnetic storage media, flash memory, and the like.

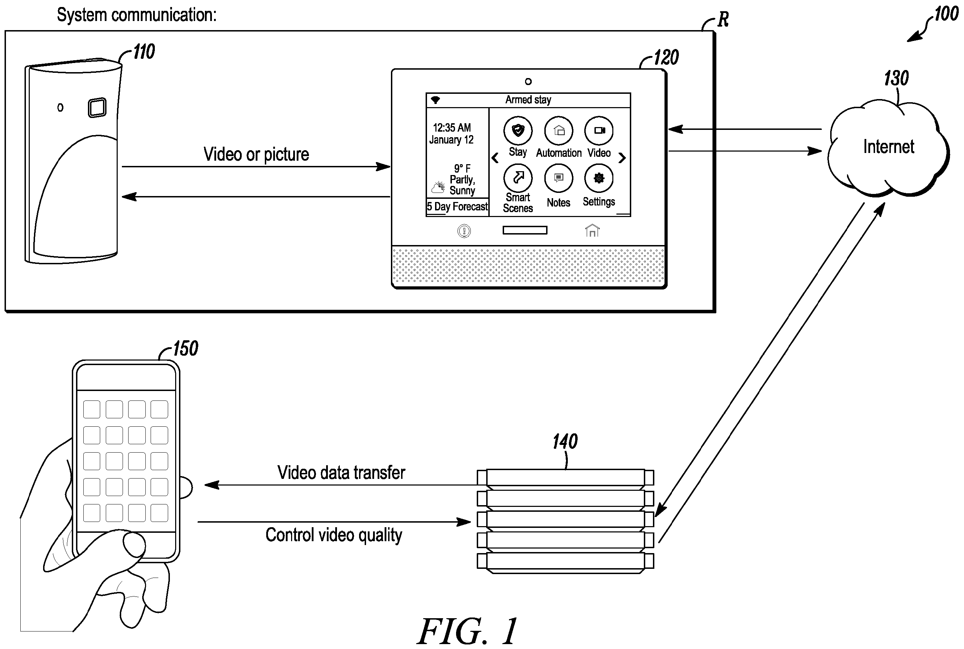

FIG. 1 is a block diagram of a system 100 in accordance with disclosed embodiments. As seen in FIG. 1, the system 100 can include a camera 110 monitoring a region R. The camera 110 can capture video images of the region R. In some embodiments, the camera 110 can include a PIR camera that captures the video images in response to a PIR sensor associated with the camera 110 detecting a change in an ambient environment, for example, temperature. In some embodiments, the camera 110 may be wired or wirelessly connected to a control panel 120. The camera 110 can transmit the video images captured by the camera 110, either directly or via the control panel 120, to a mobile device 150 over a network 130 through a server 140.

As illustrated in FIG. 1, the mobile device 150 can transmit control signals through the server 140 and the network 130 to instruct one or both of the camera 110 and the control panel 120 to send a high quality image, a low quality video data stream, or an intermediate quality slow motion video data stream to the mobile device 150. For example, responsive to receiving a play video command from the mobile device 150, one or both of the camera 110 and the control panel 120 can transmit the low quality video data stream. Furthermore, responsive to receiving a pause video command from the mobile device 150, one or both of the camera 110 and the control panel 120 can transmit the high quality image, which, in some embodiments, can include a high quality image frame. In some embodiments, one or both of the camera 110 and the control panel 120 can transmit the high quality image based on a frame number or a video timestamp at which the compressed, low quality video data stream paused responsive to the pause video command. Further still, responsive to receiving a play slow motion video command from the mobile device 150, one or both of the camera 110 and the control panel 120 can transmit the intermediate quality slow motion video data stream. In some embodiments, one or both of the camera 110 and the control panel 120 can store low quality images of the low quality video data stream, intermediate images of the intermediate quality slow motion video data stream, and the high quality image as separate files or separate sets of files on a computer readable medium.

In some embodiments, the camera 110 can send high quality images to the control panel 120, and the control panel can store the high quality images. In these embodiments, the control panel 120 can generate the low quality video data stream by compressing the high quality images received from the camera 110. Furthermore, in these embodiments, the control panel 120 can generate the intermediate quality video data stream by compressing the high quality images received from the camera 110 at a lower compression rate than the compression rate used to generate the low quality video data stream.

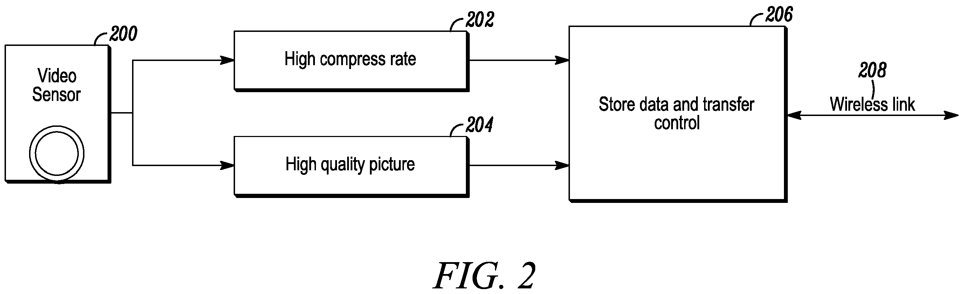

FIG. 2 is a block diagram of a video sensor 200, such as the camera 110, in accordance with disclosed embodiments. As seen in FIG. 2, the video sensor 200 can store both a high compression rate (low quality) video file 202 (related to the low quality images in the video data stream) and a plurality of high quality picture files 204 (related to the high quality images). In some embodiments, the video sensor 200 can also store an intermediate compression rate (intermediate quality) video file. In some embodiments, control circuitry 206 can store the files 202, 204 on a non-transitory computer readable medium, and in some embodiments, the control circuitry 206 can determine whether to transmit the high compression rate (low quality) video file 202 or one of the plurality of high quality picture files 204 over a wireless link 208. For example, in some embodiments, the control circuitry can transmit the high compression rate (low quality) video file 202, the one of the plurality of high quality picture files 204, or another video file over the wireless link 208 based on control signals received over the wireless link 208. In some embodiments, the control circuitry 206 can compress the high quality images captured by the video sensor 200 in response to receiving a play command over the wireless link 208.

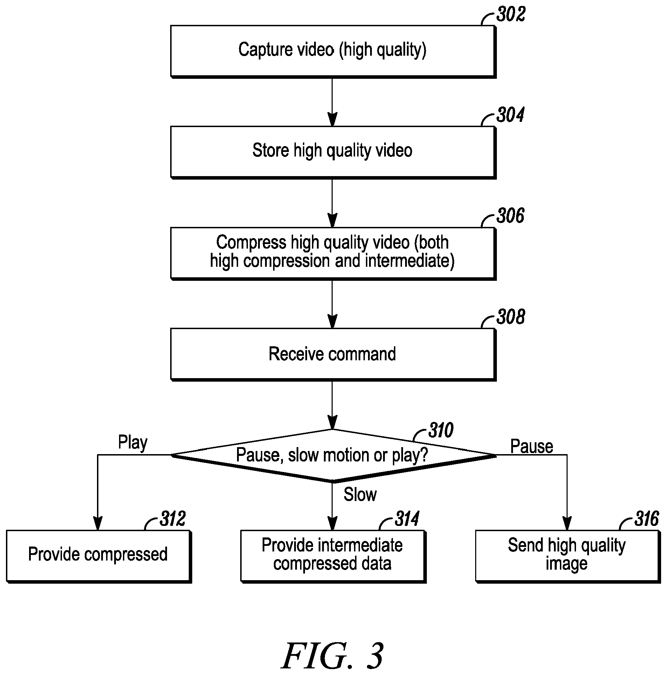

FIG. 3 is a flow diagram of a method 300 in accordance with disclosed embodiments. As seen in FIG. 3, the method 300 can include the camera 110, 200 capturing the high quality images as in 302, one or both of the camera 110, 200 and the control panel 120 storing the high quality images in memory as in 304, and one or both of the camera 110, 200 and the control panel 120 compressing the high quality images as in 306 to generate the low quality video data stream and the intermediate quality slow motion video data stream. For example, one or both of the camera 110, 200 and the control panel 120 can compress the high quality images at both a high compression rate and an intermediate compression rate. As further seen in FIG. 3, the method 300 can include one or both of the camera 110, 200 and the control panel 120 receiving a command from the mobile device 150 over a network as in 308, and the camera 110, 200 or the control panel 120 determining whether the command indicates a request to play video, pause video, or play slow motion video as in 310.

When the command includes the request to play video, the method 300 can include one or both of the camera 110, 200 and the control panel 120 transmitting the low quality video data stream to the mobile device 150 over the network as in 312. When the command includes the request to play slow motion video, the method 300 can include one or both of the camera 110, 200 and the control panel 120 transmitting the intermediate quality slow motion video data stream to the mobile device 150 over the network as in 314. When the command includes the request to pause video, the method 300 can include one or both of the camera 110, 200 and the control panel 120 transmitting one of the high quality images to the mobile device 150 over the network as in 316. In some embodiments, the one of the high quality images transmitted can correspond to a time stamp or a frame number at which the low quality video data stream or the intermediate quality slow motion video data stream paused responsive to the request to pause video.

The embodiments described herein are an improvement over conventional camera systems because the systems and methods disclosed herein can transmit a single high quality image to a mobile device for review by a user responsive to the user pausing a low quality video data stream to investigate an object, such as an intruder, depicted in the low quality video data stream. Advantageously, because the human eye does not notice or is not sensitive to low quality details in moving images, systems and methods disclosed herein can transmit the low quality video data stream to the user for viewing the low quality video data stream and, on command, can transmit the high quality image to the user for viewing details of the low quality video data stream without significantly increasing network bandwidth.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

### THE NUMBERED PARAGRAPHS BELOW FORM PART OF THE DISCLOSURE:

1. A method comprising:
   storing a plurality of images captured by a camera;
   compressing the plurality of images to generate a compressed video stream file;
   transmitting the compressed video stream file to a remote device over a network in response to receiving a play video command from the remote device over the network; and
   transmitting one of the plurality of images to the remote device over the network in response to receiving a pause video command from the remote device over the network.
2. The method of 1 further comprising the camera storing and compressing the plurality of images.
3. The method of 1 further comprising:
   wirelessly connecting the camera to a control panel; and
   the control panel transmitting the compressed video stream file or the one of the plurality of images to the remote device over the network.
4. The method of 1 wherein the compressed video stream file is compressed at a first compression ratio.
5. The method of 4 further comprising:
   compressing the plurality of images to generate an intermediate compression video stream file,
   wherein the intermediate compression video stream file is compressed at a second compression ratio, and
   wherein the second compression ratio is lower than the first compression ratio.
6. The method of 5 further comprising transmitting the intermediate compression video stream file to the remote device over the network in response to receiving a play slow motion video command from the remote device over the network.
7. The method of 1 wherein the camera includes a passive infrared camera.
8. The method of 1 further comprising receiving a frame number or a time stamp from the remote device indicating a frame at which the compressed video stream file is paused.
9. The method of 8 further comprising selecting the one of the plurality of images based on the frame number or the time stamp.
10. A system comprising:
   a camera;
   a transceiver device;
   a programmable processor; and
   executable control software stored on a non-transitory computer readable medium,
   wherein the camera captures a plurality of images,
   wherein the programmable processor and the executable control software store the plurality of images on the non-transitory computer readable medium,
   wherein the programmable processor and the executable control software compress the plurality of images to generate a compressed video stream file,
   wherein the transceiver device transmits the compressed video stream file to a remote device over a network in response to receiving a play video command from the remote device over the network, and
   wherein the transceiver device transmits one of the plurality of images to the remote device over the network in response to receiving a pause video command from the remote device over the network.
11. The system of 10 wherein the compressed video stream file is compressed at a first compression ratio.
12. The system of 11 wherein the programmable processor and the executable control software compress the plurality of images to generate an intermediate compression video stream file, wherein the intermediate compression video stream file is compressed at a second compression ratio, and wherein the second compression ratio is lower than the first compression ratio.
13. The system of 12 wherein the transceiver device transmits the intermediate compression video stream file to the remote device over the network in response to receiving a play slow motion video command from the remote device over the network.
14. The system of 10 wherein the camera includes a passive infrared camera.
15. The system of 10 wherein the transceiver device receives a frame number or a time stamp from the remote device indicating a frame at which the compressed video stream file is paused.
16. The system of 15 wherein the programmable processor and the executable control software select the one of the plurality of images based on the frame number or the time stamp.
17. A method comprising:
   a processor of a control panel receiving a plurality of images captured by a camera from the camera;
   the processor of the control panel storing the plurality of images;
   the processor of the control panel compressing the plurality of images to generate a compressed video stream file;
   the processor of the control panel transmitting the compressed video stream file to a remote device over a network in response to receiving a play video command from the remote device over the network; and
   the processor of the control panel transmitting one of the plurality of images to the remote device over the network in response to receiving a pause video command from the remote device over the network.
18. The method of 17 wherein the compressed video stream file is compressed at a first compression ratio.
19. The method of 18 further comprising the processor of the control panel compressing the plurality of images to generate an intermediate compression video stream file, wherein the intermediate compression video stream file is compressed at a second compression ratio, and wherein the second compression ratio is lower than the first compression ratio.
20. The method of 19 further comprising the processor of the control panel transmitting the intermediate compression video stream file to the remote device over the network in response to receiving a play slow motion video command from the remote device over the network.

## Claims

1. A method comprising:
storing a plurality of images captured by a camera;
compressing the plurality of images to generate a compressed video stream file;
transmitting the compressed video stream file to a remote device over a network in response to receiving a play video command from the remote device over the network; and
transmitting one of the plurality of images to the remote device over the network in response to receiving a pause video command from the remote device over the network.

2. The method of claim 1 further comprising the camera storing and compressing the plurality of images.

3. The method of claim 1 or claim 2 further comprising:
wirelessly connecting the camera to a control panel; and
the control panel transmitting the compressed video stream file or the one of the plurality of images to the remote device over the network.

4. The method of any of claims 1 to 3 wherein the compressed video stream file is compressed at a first compression ratio.

5. The method of claim 4 further comprising:
compressing the plurality of images to generate an intermediate compression video stream file,
wherein the intermediate compression video stream file is compressed at a second compression ratio, and
wherein the second compression ratio is lower than the first compression ratio.

6. The method of claim 5 further comprising transmitting the intermediate compression video stream file to the remote device over the network in response to receiving a play slow motion video command from the remote device over the network.

7. The method of any of claims 1 to 6 wherein the camera includes a passive infrared camera.

8. The method of any of claims 1 to 7 further comprising receiving a frame number or a time stamp from the remote device indicating a frame at which the compressed video stream file is paused.

9. The method of claim 8 further comprising selecting the one of the plurality of images based on the frame number or the time stamp.

10. A system comprising:
a camera;
a transceiver device;
a programmable processor; and
executable control software stored on a non-transitory computer readable medium,
wherein the camera captures a plurality of images,
wherein the programmable processor and the executable control software store the plurality of images on the non-transitory computer readable medium,
wherein the programmable processor and the executable control software compress the plurality of images to generate a compressed video stream file,
wherein the transceiver device transmits the compressed video stream file to a remote device over a network in response to receiving a play video command from the remote device over the network, and
wherein the transceiver device transmits one of the plurality of images to the remote device over the network in response to receiving a pause video command from the remote device over the network.

11. The system of claim 10 wherein the compressed video stream file is compressed at a first compression ratio.

12. The system of claim 10 or claim 11 wherein the programmable processor and the executable control software compress the plurality of images to generate an intermediate compression video stream file, wherein the intermediate compression video stream file is compressed at a second compression ratio, and wherein the second compression ratio is lower than the first compression ratio.

13. The system of claim 12 wherein the transceiver device transmits the intermediate compression video stream file to the remote device over the network in response to receiving a play slow motion video command from the remote device over the network.

14. The system of any of claims 10 to 13 wherein the camera includes a passive infrared camera.

15. The system of any of claims 10 to 14 wherein the transceiver device receives a frame number or a time stamp from the remote device indicating a frame at which the compressed video stream file is paused.

## Amended claims

### Amended claims in accordance with Rule 137(2) EPC.

1. A method comprising:
storing a plurality of images captured by a camera;
compressing the plurality of images to generate a compressed video stream file;
compressing the plurality of images to generate an intermediate compression video stream file;
transmitting the compressed video stream file to a remote device over a network in response to receiving a play video command from the remote device over the network; and
transmitting one of the plurality of images to the remote device over the network in response to receiving a pause video command from the remote device over the network; and
transmitting the intermediate compression video stream file to the remote device over the network in response to receiving a play slow motion video command from the remote device over the network,
wherein the compressed video stream file is compressed at a first compression ratio,
wherein the intermediate compression video stream file is compressed at a second compression ratio, and
wherein the second compression ratio is lower than the first compression ratio.

2. The method of claim 1 further comprising the camera storing and compressing the plurality of images.

3. The method of claim 1 further comprising:
wirelessly connecting the camera to a control panel; and
the control panel transmitting the compressed video stream file, the one of the plurality of images, or the intermediate compression video stream file to the remote device over the network.

4. The method of claim 1 wherein the camera includes a passive infrared camera.

5. The method of claim 1 further comprising receiving a frame number or a time stamp from the remote device indicating a frame at which the compressed video stream file is paused.

6. The method of claim 8 further comprising selecting the one of the plurality of images based on the frame number or the time stamp.

7. A system comprising:
a camera;
a transceiver device;
a programmable processor; and
executable control software stored on a non-transitory computer readable medium,
wherein the camera captures a plurality of images,
wherein the programmable processor and the executable control software store the plurality of images on the non-transitory computer readable medium,
wherein the programmable processor and the executable control software compress the plurality of images to generate a compressed video stream file,
wherein the compressed video stream file is compressed at a first compression ratio,
wherein the programmable processor and the executable control software compress the plurality of images to generate an intermediate compression video stream file,
wherein the intermediate compression video stream file is compressed at a second compression ratio,
wherein the second compression ratio is lower than the first compression ratio,
wherein the transceiver device transmits the compressed video stream file to a remote device over a network in response to receiving a play video command from the remote device over the network,
wherein the transceiver device transmits one of the plurality of images to the remote device over the network in response to receiving a pause video command from the remote device over the network, and
wherein the transceiver device transmits the intermediate compression video stream file to the remote device over the network in response to receiving a play slow motion video command from the remote device over the network.

8. The system of claim 7 wherein the camera includes a passive infrared camera.

9. The system of claim 7 wherein the transceiver device receives a frame number or a time stamp from the remote device indicating a frame at which the compressed video stream file is paused.
